# DEMANDE DE BREVET EUROPEEN

(11) **EP 4 202 594 A1**
(43) Date de publication de la demande: **28.06.2023**
(21) Numéro de dépôt: 22216684.5
(22) Date de dépôt: 26.12.2022
(51) Int. Cl.: G06F 1/02, G06F 13/00, H04L 5/02, H04L 27/34

(54) **CIRCUIT ÉLECTRONIQUE À SORTIE MUTUALISÉE, DESTINÉ À ÉQUIPER UN ÉLÉMENT DE VÉHICULE**

(30) Priorité: 26.12.2021 FR 2114527
(71) Demandeur: Valeo Vision, 93012 Bobigny Cedex (FR)
(72) Inventeur: LE BRETON, Erwan, 49000 Angers (FR); JOUBERT, Yoann, 49000 Angers (FR); HAUTIN, Thierry, 49000 Angers (FR)
(74) Mandataire: Valeo Visibility

(57) **Abrégé**

L'invention concerne un circuit électronique (22) comprenant un microcontrôleur (24), un émetteur-récepteur de signaux conforme au protocole de communication LIN (26), et une broche (10) de transmission et de réception de signaux reliée à l'émetteur-récepteur (26) et apte à transmettre et recevoir des signaux conformes au protocole de communication LIN, une entrée (42) de transmission de signaux de l'émetteur-récepteur (26) étant reliée à une sortie (40) du microcontrôleur (24), une sortie (44) de réception de signaux de l'émetteur-récepteur (26) étant reliée à une première entrée (36) du microcontrôleur (24) pour lui transmettre des signaux LIN.

Selon l'invention, la sortie (44) de réception de signaux de l'émetteur-récepteur (26) est reliée également à une deuxième entrée (38) du microcontrôleur (24), et la broche (10) est configurée pour recevoir des signaux modulés via une modulation de largeur d'impulsions, l'émetteur-récepteur (26) étant configuré pour émettre lesdits signaux sur sa sortie (44).

## Description

### Domaine technique

La présente invention appartient au domaine des circuits électroniques destinés à équiper des éléments de véhicules automobiles (en particulier des éléments d'éclairage et/ou de signalisation), afin de permettre une communication bidirectionnelle entre de tels éléments et une unité de commande électronique du véhicule. L'invention vise notamment un circuit électronique pour un élément de véhicule, en particulier pour un projecteur de véhicule, le circuit électronique comprenant un microcontrôleur et un émetteur-récepteur de signaux conforme au protocole de communication LIN (de l'anglais « Local Interconnect Network »). Un tel circuit électronique se présente typiquement sous la forme d'une carte de circuit imprimé ou PCB (de l'anglais « Printed Circuit Board »), bien que cela ne soit pas limitatif dans le cadre de la présente invention.

### Etat de la technique

Les dispositifs d'éclairage et/ou de signalisation d'un véhicule, tels que les projecteurs de phare ou de feu, comprennent généralement un module électronique de pilotage. Un tel module permet un pilotage, par une unité de commande électronique du véhicule, des éléments lumineux agencés au sein du dispositif d'éclairage et/ou de signalisation. L'unité de commande électronique est classiquement une unité de contrôle de la carrosserie ou BCM (de l'anglais « Body Control Module »), qui permet notamment de contrôler la synchronisation entre les différents dispositifs d'éclairage, les essuie-glaces et divers autres appareils du véhicule, ainsi que de gérer le fonctionnement des systèmes de verrouillage/déverrouillage et des vitres et rétroviseurs électriques par exemple. Le module électronique de pilotage est généralement encapsulé dans le dispositif d'éclairage et/ou de signalisation et peut comporter un boîtier ainsi qu'un radiateur pour dissiper l'énergie thermique émise. Un tel module comporte également un circuit électronique agencé au sein du boîtier, le circuit électronique se présentant classiquement sous la forme d'une carte de circuit imprimé ou PCB et étant configuré pour permettre une communication bidirectionnelle entre les éléments lumineux du dispositif et l'unité de commande électronique du véhicule.

Le circuit électronique comporte un microcontrôleur relié aux éléments lumineux du dispositif. Le circuit électronique peut également comporter un émetteur-récepteur de signaux conforme au protocole de communication LIN et un étage d'entrée, tous deux reliés au microcontrôleur. L'émetteur-récepteur de signaux conforme au protocole de communication LIN est typiquement utilisé pour effectuer des opérations de diagnostic et/ou de réécriture à distance sur le microcontrôleur, par exemple via un ordinateur portable pouvant être connecté à une broche reliée à l'émetteur-récepteur. Pour ce faire, le module de pilotage doit être démonté du dispositif d'éclairage et/ou de signalisation afin de connecter l'ordinateur portable sur la broche dédiée. Une telle opération est longue et coûteuse. L'ordinateur portable est apte à émettre des signaux conformes au protocole de communication LIN qui permettent d'exécuter de telles opérations de diagnostic et/ou de réécriture à distance sur le microcontrôleur. L'émetteur-récepteur comporte une entrée de transmission de signaux et une sortie de réception de signaux, toutes deux reliées au microcontrôleur. Les signaux LIN émis par le microcontrôleur à destination de l'ordinateur portable (par exemple suite à une requête de diagnostic transmise par l'ordinateur portable sous la forme d'un signal LIN), et transitant via l'émetteur-récepteur, sont typiquement des signaux indicatifs d'une ou plusieurs défaillance(s) sur les éléments lumineux, ou encore des signaux indicatifs de l'état courant de ces éléments lumineux et permettant d'effectuer leur diagnostic. Les opérations de réécriture à distance sur le microcontrôleur sont notamment nécessaires lorsqu'un problème est rencontré avec le micrologiciel stocké dans le microcontrôleur. L'étage d'entrée, qui se présente sous la forme d'un ou plusieurs composant(s) matériel(s), peut typiquement recevoir des signaux modulés via une modulation de largeur d'impulsions, de tels signaux permettant par exemple de lancer des scénarios ou animations lumineuses sur les éléments lumineux du dispositif d'éclairage et/ou de signalisation. Pour ce faire l'étage d'entrée est relié à une broche d'entrée de réception de signaux, cette broche d'entrée étant elle-même connectée à un bus de communication de données s'étendant au sein du véhicule et relié à l'unité de commande électronique du véhicule. Les signaux modulés via une modulation de largeur d'impulsions sont ainsi émis par l'unité de commande électronique du véhicule à destination du microcontrôleur du circuit électronique, pour le pilotage des éléments lumineux selon un scénario ou une animation lumineuse prédéterminé(e). Toutefois, un inconvénient d'un tel circuit électronique est qu'il nécessite l'utilisation de nombreux composants matériels qui prennent de la place sur la carte électronique du circuit. Ceci augmente les coûts de fabrication du circuit.

Le document brevet publié KR 20050069852 A décrit un circuit électronique « esclave » et conforme au protocole de communication LIN. Ce circuit électronique « esclave », qui comporte un microcontrôleur, est relié à une unité de commande électronique du véhicule (qui constitue un dispositif électronique « maître ») via un bus de données conforme au protocole de communication LIN. Un ordinateur extérieur, typiquement un ordinateur portable, peut être connecté directement sur le bus de communication LIN pour effectuer des opérations de reprogrammation ou de téléversement de programmes à distance sur le microcontrôleur du circuit électronique, sans devoir démonter pour cela le boîtier dans lequel est installé le circuit. Dans ce cas, la communication entre l'unité de commande électronique du véhicule et le circuit électronique est interrompue. Toutefois, un inconvénient d'un tel circuit électronique est qu'il implique d'utiliser dans le circuit une broche dédiée pour la réception et la transmission de signaux conformes au protocole de communication LIN, ce qui augmente là encore les coûts.

### Exposé de l'invention

La présente invention vient améliorer la situation.

Un objectif de l'invention est de proposer un circuit électronique destiné à équiper un élément de véhicule, le circuit électronique comprenant un microcontrôleur et un émetteur-récepteur de signaux conforme au protocole de communication LIN, et présentant un nombre de composants et une taille réduit(e)s tout en assurant une communication bidirectionnelle et permettant des opérations de diagnostic et/ou de réécriture à distance sur le microcontrôleur sans nécessiter, pour ce faire, d'extraire le circuit électronique du véhicule.

A cet effet un premier aspect de l'invention concerne un circuit électronique destiné à équiper un élément de véhicule, le circuit électronique comprenant un microcontrôleur, un émetteur-récepteur de signaux conforme au protocole de communication LIN, et une broche de transmission et de réception de signaux reliée à l'émetteur-récepteur, la broche de transmission et de réception de signaux étant apte à être connectée à un bus de communication de données installé au sein du véhicule et étant apte à transmettre et recevoir des signaux conformes au protocole de communication LIN, une entrée de transmission de signaux de l'émetteur-récepteur étant reliée à une sortie du microcontrôleur, une sortie de réception de signaux de l'émetteur-récepteur étant reliée à une première entrée du microcontrôleur pour transmettre au microcontrôleur des signaux conformes au protocole de communication LIN.

Selon l'invention, la sortie de réception de signaux de l'émetteur-récepteur est reliée également à une deuxième entrée du microcontrôleur, et la broche de transmission et de réception de signaux est configurée pour recevoir des signaux modulés via une modulation de largeur d'impulsions et issus du bus de communication de données, l'émetteur-récepteur étant configuré pour émettre sur sa sortie de réception de signaux, à destination de la deuxième entrée du microcontrôleur, lesdits signaux modulés via une modulation de largeur d'impulsions.

Une telle configuration permet avantageusement de supprimer l'étage d'entrée du circuit électronique de l'art antérieur, et d'économiser ainsi (outre les composants matériels de l'étage d'entrée) une broche sur la carte électronique du circuit. En effet, la fonction de réception de signaux modulés via une modulation de largeur d'impulsions d'une part, et la fonction de transmission et de réception de signaux conformes au protocole de communication LIN d'autre part, sont mutualisées sur une même broche du circuit. La mutualisation de ces deux fonctions sur une même broche de transmission et de réception de signaux permet d'économiser de l'espace sur la carte électronique du circuit, ce qui permet de réduire la taille de ce dernier et donc de réduire les coûts de fabrication. En outre, une telle configuration permet d'effectuer des opérations de diagnostic et/ou de réécriture à distance sur le microcontrôleur sans nécessiter, pour ce faire, d'extraire le circuit électronique du véhicule.

Selon un mode de réalisation de l'invention, le circuit électronique comporte en outre une résistance connectée en série entre la sortie de réception de signaux de l'émetteur-récepteur et la deuxième entrée du microcontrôleur.

Selon un mode de réalisation de l'invention, la sortie de réception de signaux de l'émetteur-récepteur est reliée à la deuxième entrée du microcontrôleur via une liaison de données, et le circuit électronique comporte en outre une résistance de tirage connectée entre d'une part un point de jonction situé sur ladite liaison de données et d'autre part une source d'alimentation électrique fournissant une tension électrique constante positive, ladite résistance de tirage étant configurée pour imposer un état haut au potentiel électrique du point de jonction. La tension électrique constante positive fournie par la source d'alimentation électrique est par exemple sensiblement égale à 5 V, sans que cela ne soit limitatif dans le cadre de la présente invention. Ceci permet de générer une modulation d'amplitude pour les signaux transitant sur la sortie de réception de signaux de l'émetteur-récepteur, et de réduire ainsi substantiellement l'influence des éventuelles perturbations électromagnétiques (dues aux autres composants électroniques du véhicule) sur ces signaux.

Selon un mode de réalisation préféré de l'invention, le microcontrôleur stocke un micrologiciel, le micrologiciel étant configuré pour appliquer en permanence un état franc haut sur la sortie du microcontrôleur reliée à l'entrée de transmission de signaux de l'émetteur-récepteur. Ceci permet d'éviter tout risque de court-circuit au sein de l'architecture électronique reliée au bus de communication de données du véhicule. En effet, du côté d'une unité de commande électronique du véhicule reliée au bus de communication de données, un état franc haut est appliqué en permanence sur ce bus de communication. Cette caractéristique permet donc de rendre compatible le circuit électronique selon l'invention avec les unités de commande électronique de véhicule existantes (en particulier avec les unités de contrôle de la carrosserie ou BCM).

Selon un autre mode de réalisation préféré de l'invention, alternatif ou complémentaire au mode de réalisation précédent, l'entrée de transmission de signaux de l'émetteur-récepteur est reliée à la sortie du microcontrôleur via une liaison de données, et le circuit électronique comporte en outre une résistance de tirage connectée entre d'une part un point de jonction situé sur ladite liaison de données et d'autre part une source d'alimentation électrique fournissant une tension électrique constante positive, ladite résistance de tirage étant configurée pour imposer un état haut au potentiel électrique du point de jonction. La tension électrique constante positive fournie par la source d'alimentation électrique est par exemple sensiblement égale à 5 V, sans que cela ne soit limitatif dans le cadre de la présente invention. Ceci permet de générer une modulation d'amplitude pour les signaux transitant sur l'entrée de transmission de signaux de l'émetteur-récepteur, et de réduire ainsi substantiellement l'influence des éventuelles perturbations électromagnétiques (dues aux autres composants électroniques du véhicule) sur ces signaux. Une telle configuration permet en outre de garantir un état franc haut sur l'entrée de transmission de signaux de l'émetteur-récepteur (en particulier lors de l'initialisation du microcontrôleur), et d'éviter ainsi tout risque de court-circuit au sein de l'architecture électronique reliée au bus de communication de données du véhicule.

Un autre objet de l'invention concerne un module électronique de pilotage pour un élément d'éclairage et/ou de signalisation d'un véhicule, en particulier pour un projecteur de véhicule, comprenant un circuit électronique selon l'invention.

Un autre objet de l'invention concerne un élément d'éclairage et/ou de signalisation d'un véhicule, en particulier projecteur de véhicule, comprenant un circuit électronique ou un module électronique de pilotage selon l'invention. Lorsque l'élément d'éclairage et/ou de signalisation d'un véhicule comporte un module électronique de pilotage selon l'invention, ce dernier est avantageusement monté amovible dans l'élément d'éclairage et/ou de signalisation.

Un autre objet de l'invention concerne un procédé, mis en oeuvre par un micrologiciel stocké dans un microcontrôleur d'un circuit électronique installé au sein d'un élément de véhicule, d'activation d'un mode de communication conforme au protocole LIN entre un émetteur-récepteur du circuit électronique et le microcontrôleur, le véhicule comprenant une unité de commande électronique reliée à un bus de communication de données, le circuit électronique comprenant, outre le microcontrôleur et l'émetteur-récepteur, une broche de transmission et de réception de signaux reliée à l'émetteur-récepteur et au bus de communication de données, l'émetteur-récepteur de signaux étant conforme au protocole de communication LIN, une entrée de transmission de signaux de l'émetteur-récepteur étant reliée à une sortie du microcontrôleur, une sortie de réception de signaux de l'émetteur-récepteur étant reliée d'une part à une première entrée du microcontrôleur, et d'autre part à une deuxième entrée du microcontrôleur, la première entrée du microcontrôleur étant initialement active, la deuxième entrée du microcontrôleur étant initialement inactive ;
le procédé comportant les étapes consistant à :
- vérifier, pendant une durée prédéfinie, si au moins une trame de communication conforme au protocole de communication LIN est reçue sur la première entrée du microcontrôleur ;
- si le résultat de la vérification est positif, activer le mode de communication conforme au protocole LIN entre l'émetteur-récepteur et le microcontrôleur afin de permettre des opérations de diagnostic et/ou de réécriture à distance sur le microcontrôleur, la broche de transmission et de réception de signaux étant alors apte à transmettre et à recevoir des signaux conformes au protocole de communication LIN, lesdits signaux transitant entre la sortie de réception de signaux de l'émetteur-récepteur et la première entrée du microcontrôleur lorsque la broche reçoit de tels signaux ; et
- si le résultat de la vérification est négatif, désactiver la première entrée du microcontrôleur, activer la deuxième entrée du microcontrôleur, et ne pas activer le mode de communication conforme au protocole LIN entre l'émetteur-récepteur et le microcontrôleur, la broche de transmission et de réception de signaux étant alors apte à recevoir des signaux modulés via une modulation de largeur d'impulsions et issus de l'unité de commande électronique, lesdits signaux transitant entre la sortie de réception de signaux de l'émetteur-récepteur et la deuxième entrée du microcontrôleur lorsque la broche reçoit de tels signaux.

Selon un mode de réalisation préféré de l'invention, le micrologiciel applique en permanence un état franc haut sur la sortie du microcontrôleur reliée à l'entrée de transmission de signaux de l'émetteur-récepteur. Ceci permet d'éviter tout risque de court-circuit au sein de l'architecture électronique reliée au bus de communication de données du véhicule. En effet, du côté de l'unité de commande électronique du véhicule reliée au bus de communication de données, un état franc haut est appliqué en permanence sur ce bus de communication. Cette caractéristique permet donc de rendre compatible le procédé selon l'invention avec les unités de commande électronique de véhicule existantes (en particulier avec les unités de contrôle de la carrosserie ou BCM).

Selon un autre mode de réalisation préféré de l'invention, alternatif ou complémentaire au mode de réalisation précédent, l'entrée de transmission de signaux de l'émetteur-récepteur est reliée à la sortie du microcontrôleur via une liaison de données, et le circuit électronique comporte en outre une résistance de tirage connectée entre d'une part un point de jonction situé sur ladite liaison de données et d'autre part une source d'alimentation électrique fournissant une tension électrique constante positive, ladite résistance de tirage imposant un état haut au potentiel électrique du point de j onction. La tension électrique constante positive fournie par la source d'alimentation électrique est par exemple sensiblement égale à 5 V, sans que cela ne soit limitatif dans le cadre de la présente invention. Ceci permet de générer une modulation d'amplitude pour les signaux transitant sur la sortie de réception de signaux de l'émetteur-récepteur, et de réduire ainsi substantiellement l'influence des éventuelles perturbations électromagnétiques (dues aux autres composants électroniques du véhicule) sur ces signaux. Une telle configuration permet en outre de garantir un état franc haut sur l'entrée de transmission de signaux de l'émetteur-récepteur (en particulier lors de l'initialisation du microcontrôleur), et d'éviter ainsi tout risque de court-circuit au sein de l'architecture électronique reliée au bus de communication de données du véhicule.

Un autre objet de l'invention concerne un programme d'ordinateur, du type micrologiciel, téléchargeable depuis un réseau de communication et/ou enregistré sur un support lisible par ordinateur et/ou exécutable par un processeur, le programme d'ordinateur comprenant des instructions de programme, lesdites instructions de programme mettant en oeuvre les étapes du procédé selon l'invention lorsque lesdites instructions sont exécutées sur le microcontrôleur du circuit électronique.

Un autre objet de l'invention concerne un dispositif pour effectuer des opérations de diagnostic et/ou de réécriture à distance sur un microcontrôleur d'un circuit électronique selon l'invention, le dispositif étant apte à être relié au circuit électronique et comprenant des moyens d'émission et de réception de signaux conformes au protocole de communication LIN, des moyens de connexion à la broche de transmission et de réception de signaux, et des moyens de connexion à un bus d'alimentation électrique installé au sein du véhicule.

Selon un mode de réalisation de l'invention, le dispositif comporte un ordinateur portable muni d'une prise USB (de l'anglais « Universal Serial Bus »), un convertisseur de format USB/LIN connecté sur la prise USB de l'ordinateur portable, et un connecteur relié au convertisseur de format USB/LIN, le connecteur comprenant une interface de connexion à la broche de transmission et de réception de signaux et une interface de connexion au bus d'alimentation électrique installé au sein du véhicule.

Ici, on entend par « véhicule » tout type de véhicule tel qu'un véhicule automobile, un cyclomoteur, une motocyclette, un robot de stockage dans un entrepôt, ou toute autre engin apte à embarquer au moins un passager ou destiné au transport de personnes ou d'objets.

### Brève description des dessins

D'autres caractéristiques et avantages de l'invention apparaîtront à l'examen de la description détaillée ci-après, et des dessins annexés sur lesquels :
[Fig 1] est une représentation schématique d'un ensemble comprenant un dispositif pour effectuer des opérations de diagnostic et/ou de réécriture à distance sur un microcontrôleur, et un élément d'éclairage et/ou de signalisation d'un véhicule relié au dispositif et à une unité de commande électronique du véhicule, l'élément d'éclairage et/ou de signalisation comprenant un circuit électronique selon l'invention ;
[Fig 2] est une représentation schématique du circuit électronique de la figure 1 selon un mode de réalisation particulier de l'invention, le circuit électronique comprenant un émetteur-récepteur et un microcontrôleur ; et
[Fig 3] est un organigramme représentant un procédé, mis en oeuvre par un micrologiciel stocké dans le microcontrôleur du circuit électronique de la figure 2, d'activation d'un mode de communication conforme au protocole LIN entre l'émetteur-récepteur et le microcontrôleur.

### Description détaillée

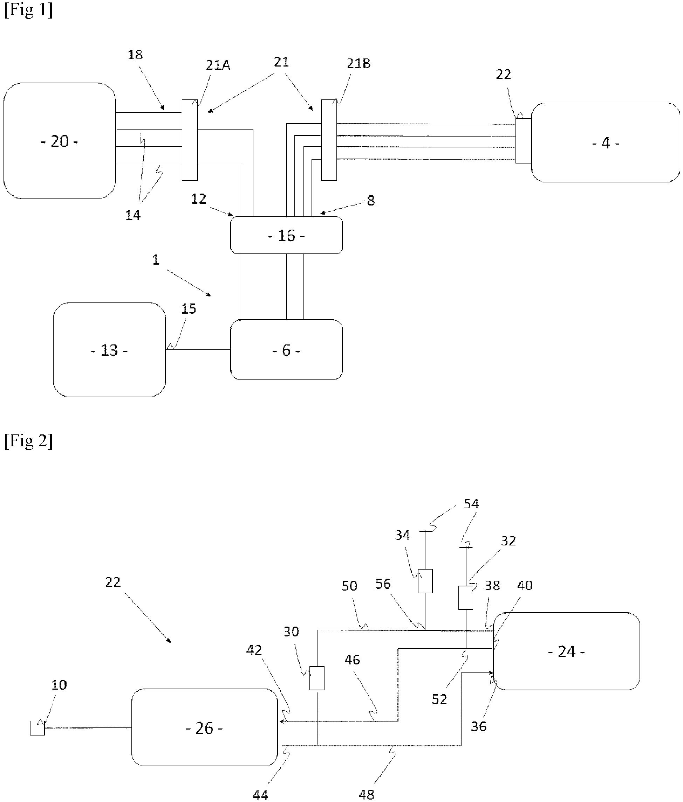

La figure 1 est une représentation schématique d'un ensemble comprenant un dispositif 1 pour effectuer des opérations de diagnostic et/ou de réécriture à distance sur un microcontrôleur, et un élément d'éclairage et/ou de signalisation 4 de véhicule.

Le dispositif 1 comprend des moyens 6 d'émission et de réception de signaux conformes au protocole de communication LIN (de l'anglais « Local Interconnect Network »), des moyens 8 de connexion à une broche 10 de transmission et de réception de signaux (une telle broche 10 n'étant pas représentée sur la figure 1 mais étant visible sur la figure 2), et des moyens 12 de connexion à un bus d'alimentation électrique 14 installé au sein du véhicule. De préférence, le dispositif 1 comporte également un ordinateur portable 13 muni d'une prise USB 15 (de l'anglais « Universal Serial Bus »).

Comme illustré sur la figure 1, les moyens 6 d'émission et de réception de signaux conformes au protocole de communication LIN sont par exemple constitués d'un convertisseur de format USB/LIN connecté sur la prise USB 15 du dispositif 1. Dans l'exemple de réalisation particulier de la figure 1, les moyens 8 de connexion à une broche 10 de transmission et de réception de signaux et les moyens 12 de connexion au bus d'alimentation électrique 14 sont formés par un unique connecteur 16. Le connecteur 16 est relié au convertisseur de format USB/LIN 6 et comprend une interface 8 (sous la forme d'un ou plusieurs port(s)) de connexion à la broche 10 de transmission et de réception de signaux et une interface 12 (sous la forme d'un ou plusieurs port(s)) de connexion au bus d'alimentation électrique 14.

L'élément d'éclairage et/ou de signalisation 4 est relié à une unité 20 de commande électronique du véhicule via un bus de communication de données 18. Le bus de communication de données 18 comporte plusieurs liaisons ou faisceaux. Un sous-ensemble de liaisons du bus de communication de données 18 constitue le bus d'alimentation électrique 14. De préférence, comme illustré sur la figure 1, le bus de communication de données 18 est muni d'un connecteur 21 constitué de deux parties complémentaires 21A, 21B détachables l'une de l'autre, telles qu'une partie mâle 21A et une partie femelle 21B. Ceci permet, lorsque les parties complémentaires 21A, 21B sont détachées l'une de l'autre, de pouvoir connecter le connecteur 16 (et plus particulièrement les interfaces 8, 12) entre ces parties 21A, 21B, afin de récupérer d'une part l'alimentation électrique issue du bus d'alimentation électrique 14 pour venir alimenter un circuit électronique 22 de l'élément d'éclairage et/ou de signalisation 4, et de permettre d'autre part une communication entre le dispositif 1 et ce circuit électronique 22. Plus précisément, l'interface 8 est apte à être connectée à la partie 21B du connecteur 16, et l'interface 12 est apte à être connectée à la partie 21A du connecteur 16. Le circuit électronique 22 de l'élément d'éclairage et/ou de signalisation 4 est alors relié uniquement au dispositif 1.

L'élément d'éclairage et/ou de signalisation 4 comporte un élément optique du type lentille, un boîtier et un ou plusieurs élément(s) lumineux de type diode(s) électroluminescente(s) (ces différents éléments n'étant pas représentés sur les figures pour des raisons de clarté). L'élément d'éclairage et/ou de signalisation 4 comporte également un circuit électronique 22 agencé au sein du boîtier et relié aux éléments lumineux. Selon un mode de réalisation particulier de l'invention, le circuit électronique 22 peut être agencé au sein d'un module électronique de pilotage, ce dernier étant avantageusement monté amovible dans l'élément d'éclairage et/ou de signalisation 4. Un tel module (non représenté sur les figures) permet un pilotage, par l'unité de commande électronique 20, des éléments lumineux de type diodes électroluminescentes. Le module électronique de pilotage est généralement encapsulé dans l'élément 4 et peut comporter, outre le boîtier et le circuit électronique 22, un radiateur pour dissiper l'énergie thermique émise. L'élément d'éclairage et/ou de signalisation 4 est typiquement un projecteur de véhicule, par exemple un projecteur de phare ou de feu de signalisation (typiquement un projecteur de feu avant ou arrière).

Comme illustré sur la figure 2, le circuit électronique 22 comporte un microcontrôleur 24, un émetteur-récepteur de signaux conforme au protocole de communication LIN 26, et une broche 10 de transmission et de réception de signaux. De préférence, le circuit électronique 22 comporte également une résistance 30, une première résistance de tirage 32 et une seconde résistance de tirage 34. Le circuit électronique 22 se présente typiquement sous la forme d'une carte de circuit imprimé ou PCB (de l'anglais « Printed Circuit Board »).

Le microcontrôleur 24 stocke un micrologiciel (non représenté sur les figures) et est relié aux éléments lumineux de type diodes électroluminescentes. Le microcontrôleur 24 présente une première entrée 36, une deuxième entrée 38 et une sortie 40. Le micrologiciel est configuré pour appliquer en permanence un état franc haut sur la sortie 40 du microcontrôleur 24.

L'émetteur-récepteur de signaux conforme au protocole de communication LIN 26 est relié à la broche 10 de transmission et de réception de signaux. L'émetteur-récepteur 26 présente une entrée 42 de transmission de signaux et une sortie 44 de réception de signaux. L'entrée 42 de transmission de signaux de l'émetteur-récepteur 26 est reliée à la sortie 40 du microcontrôleur 24 via une première liaison de données 46. La sortie 44 de réception de signaux de l'émetteur-récepteur 26 est reliée à la première entrée 36 du microcontrôleur 24 via une deuxième liaison de données 48, et à la deuxième entrée 38 du microcontrôleur 24 via une troisième liaison de données 50.

La broche 10 de transmission et de réception de signaux est reliée à l'unité de commande électronique 20 via le bus de communication de données 18. La broche 10 est également apte à être reliée au dispositif 1 via le connecteur 21. La broche 10 de transmission et de réception de signaux est configurée pour recevoir des signaux modulés via une modulation de largeur d'impulsions et issus du bus de communication de données 18 (plus précisément de l'unité de commande électronique 20, comme cela sera détaillé par la suite). De tels signaux permettent par exemple de lancer des scénarios ou animations lumineuses sur les éléments lumineux de type diodes électroluminescentes (tels que par exemple des effets de clignotement ou des effets lumineux défilants), notamment lors d'un verrouillage ou d'un déverrouillage du véhicule par un utilisateur. La broche 10 de transmission et de réception de signaux est également configurée pour transmettre et recevoir des signaux conformes au protocole de communication LIN. Les signaux LIN reçus par la broche 10 et issus du dispositif 1 sont typiquement des requêtes de diagnostic d'un ou plusieurs élément(s) lumineux par le microcontrôleur 24, ou encore des requêtes de réécriture à distance sur le microcontrôleur 24. Les signaux LIN transmis par la broche 10 et issus du microcontrôleur 24 sont typiquement des signaux indicatifs d'une ou plusieurs défaillance(s) sur les éléments lumineux, ou encore des signaux indicatifs de l'état courant de ces éléments lumineux et permettant d'effectuer leur diagnostic. De tels signaux permettent ainsi de savoir quelle fonction lumineuse est éventuellement en défaut sur l'élément d'éclairage et/ou de signalisation 4.

La résistance 30 est connectée en série entre la sortie 44 de réception de signaux de l'émetteur-récepteur 26 et la deuxième entrée 38 du microcontrôleur 24.

La première résistance de tirage 32 est connectée entre d'une part un premier point de jonction 52 situé sur la première liaison de données 46 et d'autre part une source d'alimentation électrique 54 fournissant une tension électrique constante positive. La tension électrique constante positive fournie par la source d'alimentation électrique 54 est par exemple sensiblement égale à 5 V, sans que cela ne soit limitatif dans le cadre de la présente invention. La première résistance de tirage 32 est configurée pour imposer un état haut au potentiel électrique du premier point de jonction 52.

La seconde résistance de tirage 34 est connectée entre d'une part un second point de jonction 56 situé sur la troisième liaison de données 50 et d'autre part une source d'alimentation électrique 54 fournissant une tension électrique constante positive. La tension électrique constante positive fournie par la source d'alimentation électrique 54 est par exemple sensiblement égale à 5 V, sans que cela ne soit limitatif dans le cadre de la présente invention. La seconde résistance de tirage 34 est configurée pour imposer un état haut au potentiel électrique du second point de jonction 56.

Sans que cela ne soit limitatif dans le cadre de la présente invention, l'unité de commande électronique 20 est typiquement une unité de contrôle de la carrosserie ou BCM (de l'anglais « Body Control Module »). Une telle unité BCM 20 est reliée à l'ordinateur de bord central ou principal du véhicule (non représenté), et permet notamment de contrôler la synchronisation entre les différents dispositifs d'éclairage, les essuie-glaces et divers autres appareils du véhicule, ainsi que de gérer le fonctionnement des systèmes de verrouillage/déverrouillage et des vitres et rétroviseurs électriques par exemple. L'unité de commande électronique 20 est configurée pour transmettre sur le bus de communication de données 18, à destination du circuit électronique 22, des signaux modulés via une modulation de largeur d'impulsions.

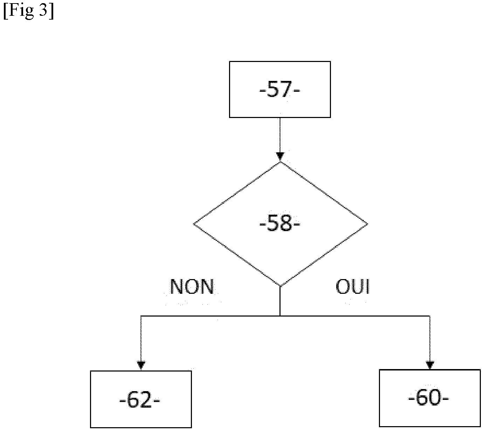

Le procédé d'activation d'un mode de communication conforme au protocole LIN entre l'émetteur-récepteur 26 et le microcontrôleur 24 du circuit électronique 22 selon l'invention, mis en oeuvre par le micrologiciel stocké dans le microcontrôleur 24, va maintenant être décrit en référence à la figure 3.

Lors de l'initialisation 57 du micrologiciel, la première entrée 36 du microcontrôleur 24 est active, la deuxième entrée du microcontrôleur 38 est inactive, et le mode de communication conforme au protocole LIN n'est pas activé entre l'émetteur-récepteur 26 et le microcontrôleur 24.

Le procédé comporte une première étape 58 au cours de laquelle le micrologiciel vérifie, pendant une durée prédéfinie, si au moins une trame de communication conforme au protocole de communication LIN est reçue sur la première entrée 36 du microcontrôleur 24. La durée prédéfinie est par exemple comprise entre 500 ms et 1000 ms.

Si le résultat de la vérification effectuée au cours de la première étape 58 est positif (ce qui signifie que le dispositif 1 est relié à la broche 10 et a envoyé à cette dernière au moins une trame de communication conforme au protocole de communication LIN), le procédé comporte une étape suivante 60 au cours de laquelle le micrologiciel active le mode de communication conforme au protocole LIN entre l'émetteur-récepteur 26 et le microcontrôleur 24. Ceci permet au dispositif 1 de pouvoir effectuer des opérations de diagnostic et/ou de réécriture à distance sur le microcontrôleur 24, la broche 10 de transmission et de réception de signaux étant alors apte à transmettre et à recevoir des signaux conformes au protocole de communication LIN. De tels signaux LIN transitent alors entre la sortie 44 de réception de signaux de l'émetteur-récepteur 26 et la première entrée 36 du microcontrôleur 24 (autrement dit sur la deuxième liaison de données 48) lorsque la broche 10 reçoit ces signaux. La communication entre l'unité de commande électronique 20 du véhicule et le circuit électronique 22 est alors interrompue.

Si le résultat de la vérification effectuée au cours de la première étape 58 est négatif, le procédé comporte une étape suivante 62 au cours de laquelle le micrologiciel désactive la première entrée 36 du microcontrôleur 24, active la deuxième entrée 38 du microcontrôleur 24, et n'active pas le mode de communication conforme au protocole LIN entre l'émetteur-récepteur 26 et le microcontrôleur 24. La broche 10 de transmission et de réception de signaux est alors apte à recevoir des signaux modulés via une modulation de largeur d'impulsions et issus de l'unité de commande électronique 20. De tels signaux transitent alors entre la sortie 44 de réception de signaux de l'émetteur-récepteur 26 et la deuxième entrée 38 du microcontrôleur 24 (autrement dit sur la troisième liaison de données 50) lorsque la broche 10 reçoit ces signaux.

Lorsque le connecteur 16 du dispositif 1 est connecté aux parties 21A, 21B du connecteur 21 et/ou lorsqu'une coupure d'alimentation électrique au sein du véhicule se produit, le micrologiciel stocké dans le microcontrôleur 24 est automatiquement réinitialisé. Le procédé reprend alors à l'étape d'initialisation 57.

La présente invention ne se limite pas aux formes de réalisation décrites ci-avant à titre d'exemples et s'étend à d'autres variantes.

## Revendications

1. Circuit électronique (22) destiné à équiper un élément (4) de véhicule, le circuit électronique (22) comprenant un microcontrôleur (24), un émetteur-récepteur de signaux conforme au protocole de communication LIN (26), et une broche (10) de transmission et de réception de signaux reliée à l'émetteur-récepteur (26), la broche (10) de transmission et de réception de signaux étant apte à être connectée à un bus de communication de données (18) installé au sein du véhicule et étant apte à transmettre et recevoir des signaux conformes au protocole de communication LIN, une entrée (42) de transmission de signaux de l'émetteur-récepteur (26) étant reliée à une sortie (40) du microcontrôleur (24), une sortie (44) de réception de signaux de l'émetteur-récepteur (26) étant reliée à une première entrée (36) du microcontrôleur (24) pour transmettre au microcontrôleur (24) des signaux conformes au protocole de communication LIN ;
**caractérisé en ce que** la sortie (44) de réception de signaux de l'émetteur-récepteur (26) est reliée également à une deuxième entrée (38) du microcontrôleur (24), et **en ce que** la broche (10) de transmission et de réception de signaux est configurée pour recevoir des signaux modulés via une modulation de largeur d'impulsions et issus du bus de communication de données (18), l'émetteur-récepteur (26) étant configuré pour émettre sur sa sortie (44) de réception de signaux, à destination de la deuxième entrée (38) du microcontrôleur (24), lesdits signaux modulés via une modulation de largeur d'impulsions.

2. Circuit électronique (22) selon la revendication 1, dans lequel le circuit électronique (22) comporte en outre une résistance (30) connectée en série entre la sortie (44) de réception de signaux de l'émetteur-récepteur (26) et la deuxième entrée (38) du microcontrôleur (24).

3. Circuit électronique (22) selon la revendication 2, dans lequel la sortie (44) de réception de signaux de l'émetteur-récepteur (26) est reliée à la deuxième entrée (38) du microcontrôleur (24) via une liaison de données (50), et le circuit électronique (22) comporte en outre une résistance de tirage (34) connectée entre d'une part un point de jonction (56) situé sur ladite liaison de données (50) et d'autre part une source d'alimentation électrique (54) fournissant une tension électrique constante positive, ladite résistance de tirage (34) étant configurée pour imposer un état haut au potentiel électrique du point de jonction (56).

4. Circuit électronique (22) selon l'une quelconque des revendications précédentes, dans lequel le microcontrôleur (24) stocke un micrologiciel, le micrologiciel étant configuré pour appliquer en permanence un état franc haut sur la sortie (40) du microcontrôleur (24) reliée à l'entrée (42) de transmission de signaux de l'émetteur-récepteur (26).

5. Circuit électronique (22) selon l'une quelconque des revendications précédentes, dans lequel l'entrée (42) de transmission de signaux de l'émetteur-récepteur (26) est reliée à la sortie (40) du microcontrôleur (24) via une liaison de données (46), et le circuit électronique (22) comporte en outre une résistance de tirage (32) connectée entre d'une part un point de jonction (52) situé sur ladite liaison de données (46) et d'autre part une source d'alimentation électrique (54) fournissant une tension électrique constante positive, ladite résistance de tirage (32) étant configurée pour imposer un état haut au potentiel électrique du point de jonction (52).

6. Module électronique de pilotage pour un élément d'éclairage et/ou de signalisation (4) d'un véhicule, en particulier pour un projecteur de véhicule, comprenant un circuit électronique (22) selon l'une quelconque des revendications précédentes.

7. Elément d'éclairage et/ou de signalisation (4) d'un véhicule, en particulier projecteur de véhicule, comprenant un circuit électronique (22) selon l'une quelconque des revendications 1 à 5 ou un module électronique de pilotage selon la revendication 6.

8. Procédé, mis en oeuvre par un micrologiciel stocké dans un microcontrôleur (24) d'un circuit électronique (22) installé au sein d'un élément (4) de véhicule, d'activation d'un mode de communication conforme au protocole LIN entre un émetteur-récepteur (26) du circuit électronique (22) et le microcontrôleur (24), le véhicule comprenant une unité de commande électronique (20) reliée à un bus de communication de données (18), le circuit électronique (22) comprenant, outre le microcontrôleur (24) et l'émetteur-récepteur (26), une broche (10) de transmission et de réception de signaux reliée à l'émetteur-récepteur (26) et au bus de communication de données (18), l'émetteur-récepteur de signaux (26) étant conforme au protocole de communication LIN, une entrée (42) de transmission de signaux de l'émetteur-récepteur (26) étant reliée à une sortie (40) du microcontrôleur (24), une sortie (44) de réception de signaux de l'émetteur-récepteur (26) étant reliée d'une part à une première entrée (36) du microcontrôleur (24), et d'autre part à une deuxième entrée (38) du microcontrôleur (24), la première entrée (36) du microcontrôleur (24) étant initialement active, la deuxième entrée (38) du microcontrôleur (24) étant initialement inactive ;
**caractérisé en ce que** le procédé comporte les étapes consistant à :
• vérifier (58), pendant une durée prédéfinie, si au moins une trame de communication conforme au protocole de communication LIN est reçue sur la première entrée (36) du microcontrôleur (24) ;
• si le résultat de la vérification (58) est positif, activer le mode de communication conforme au protocole LIN entre l'émetteur-récepteur (26) et le microcontrôleur (24) afin de permettre des opérations de diagnostic et/ou de réécriture à distance sur le microcontrôleur (24), la broche (10) de transmission et de réception de signaux étant alors apte à transmettre et à recevoir des signaux conformes au protocole de communication LIN, lesdits signaux transitant entre la sortie (44) de réception de signaux de l'émetteur-récepteur (26) et la première entrée (36) du microcontrôleur (24) lorsque la broche (10) reçoit de tels signaux ; et
• si le résultat de la vérification (58) est négatif, désactiver (62) la première entrée (36) du microcontrôleur (24), activer (62) la deuxième entrée (38) du microcontrôleur (24), et ne pas activer le mode de communication conforme au protocole LIN entre l'émetteur-récepteur (26) et le microcontrôleur (24), la broche (10) de transmission et de réception de signaux étant alors apte à recevoir des signaux modulés via une modulation de largeur d'impulsions et issus de l'unité de commande électronique (20), lesdits signaux transitant entre la sortie (44) de réception de signaux de l'émetteur-récepteur (26) et la deuxième entrée (38) du microcontrôleur (24) lorsque la broche (10) reçoit de tels signaux.

9. Procédé selon la revendication 8, dans lequel le micrologiciel applique en permanence un état franc haut sur la sortie (40) du microcontrôleur (24) reliée à l'entrée (42) de transmission de signaux de l'émetteur-récepteur (26).

10. Procédé selon la revendication 8 ou 9, dans lequel l'entrée (42) de transmission de signaux de l'émetteur-récepteur (26) est reliée à la sortie (40) du microcontrôleur (24) via une liaison de données (46), et le circuit électronique (22) comporte en outre une résistance de tirage (32) connectée entre d'une part un point de jonction (52) situé sur ladite liaison de données (46) et d'autre part une source d'alimentation électrique (54) fournissant une tension électrique constante positive, ladite résistance de tirage (32) imposant un état haut au potentiel électrique du point de jonction (52).

11. Produit programme d'ordinateur, du type micrologiciel, téléchargeable depuis un réseau de communication et/ou enregistré sur un support lisible par ordinateur et/ou exécutable par un processeur, **caractérisé en ce qu'**il comprend des instructions de programme, lesdites instructions de programme mettant en oeuvre les étapes du procédé selon l'une quelconque des revendications 8 à 10 lorsque lesdites instructions sont exécutées sur le microcontrôleur (24) du circuit électronique (22).

12. Dispositif (1) pour effectuer des opérations de diagnostic et/ou de réécriture à distance sur un microcontrôleur (24) d'un circuit électronique (22) selon l'une quelconque des revendications 1 à 5, le dispositif (1) étant apte à être relié au circuit électronique (22) et comprenant des moyens (6) d'émission et de réception de signaux conformes au protocole de communication LIN, des moyens (8) de connexion à la broche (10) de transmission et de réception de signaux, et des moyens (12) de connexion à un bus d'alimentation électrique (14) installé au sein du véhicule.

13. Dispositif (1) selon la revendication 12, dans lequel le dispositif (1) comporte un ordinateur portable (13) muni d'une prise USB (15), un convertisseur de format USB/LIN (6) connecté sur la prise USB (15) de l'ordinateur portable (13), et un connecteur (16) relié au convertisseur de format USB/LIN (6), le connecteur (16) comprenant une interface (8) de connexion à la broche (10) de transmission et de réception de signaux et une interface (12) de connexion au bus d'alimentation électrique (14) installé au sein du véhicule.
